Europäisches Patentamt

European Patent Office

Office européen des brevets

(11) Veröffentlichungsnummer: **0 090 934**

**A2**

(12) **EUROPÄISCHE PATENTANMELDUNG**

(21) Anmeldenummer: 83101577.1

(51) Int. Cl.³: **F 16 L 21/02**

(22) Anmeldetag: 18.02.83

(30) Priorität: 02.04.82 DE 3212441

(43) Veröffentlichungstag der Anmeldung:
12.10.83 Patentblatt 83/41

(84) Benannte Vertragsstaaten:
AT BE CH DE FR GB IT LI NL SE

(71) Anmelder: WOCO Franz-Josef Wolf & Co.
Sprudelallee 19
D-6483 Bad Soden-Salmünster(DE)

(72) Erfinder: Wolf, Franz Josef
Sprudelallee 19
D-6483 Bad Soden-Salmünster(DE)

(72) Erfinder: Lauer, Hansjörg
Marburger Strasse 5
D-6483 Bad Soden-Salmünster(DE)

(74) Vertreter: Jaeger, Klaus, Dr. et al,
JAEGER & PARTNER Patentanwälte Bergstrasse 48 1/2
D-8035 München-Gauting(DE)

(54) Rohrdichtung.

(57) Die Erfindung betrifft eine Rohrdichtung aus gummielastischem Werkstoff für eine ringgedichtete Rohrsteckverbindung, die beispielsweise bei Rohren für Kanalverlegungen erforderlich ist. Die Rohrdichtung weist einerseits ein Dichtlippenpaar auf, das gegen die Außenwand eines eingeführten Rohrspitzendes abdichtet. Die Rohrdichtung ist dabei mit einer Halteeinrichtung in der Rohrmuffe befestigt, wobei die Dichtlippen über einen schwenkungsflexiblen Verbindungsbereich an dieser Halteeinrichtung angeordnet sind. Zusätzlich wird eine dritte Dichtlippe vorgesehen, die mit dem Dichtlippen-Paar etwa eine Y-Konfiguration bildet. Diese weitere Dichtlippe erzeugt sowohl eine zuverlässige Abdichtung gegen einen Innendruck an der Innenwand der Rohrmuffe, dient aber gleichzeitig auch als Abstützung und Unterstützung im Sinne einer Verbesserung der Dichtwirkungen gegenüber dem Rohrspitzende.

EP 0 090 934 A2

Rohrdichtung

## Beschreibung

Die Erfindung betrifft eine Rohrdichtung aus gummielastischem Werkstoff für eine ringgedichtete Rohrsteckverbindung, insbesondere für eine Rohrmuffe und ein zugeordnetes Rohrspitzende, gemäß Oberbegriff des Anspruches 1.

Eine hier angesprochene Rohrsteckverbindung kann beispielsweise zwei konzentrisch übereinandergreifende Rohrelemente aufweisen, wobei das äußere Rohrelement als Rohrmuffe und das innere, in die Rohrmuffe einführbare Rohrelement, als Rohrspitzende bezeichnet werden.

Bei Verwendung solcher Rohrsteckverbindungen, vor allem zur Verlegung im Erdreich, besteht die Auflage, daß eine zuverlässige Abdichtung dieser Rohrsteckverbindung sowohl gegen Innendrücke als auch Außendrücke gewährleistet ist.

Zur Bewältigung dieses Problems ist eine gattungsgemäße Rohrdichtung aus dem deutschen Gebrauchsmuster DE 66 05 856.8 U1 bekannt. Bei dieser bekannten Rohrdichtung wird die Abdichtung gegenüber der äußeren Umfangswand des in die Rohrmuffe eingeschobenen Rohrspitzendes dadurch bewirkt, daß ein Dichtlippen-Paar beim Einschieben des Rohrspitzendes so gegen dessen Umfangswand verschwenkt wird, daß die ursprünglich etwa radial zur Rohrachse zeigende Dichtlippe eine Abdichtung gegen einen Innendruck, und die anfangs etwa axial zur Muffenöffnung zeigende Dichtlippe eine Abdichtung gegen Außendruck am Rohrspitzende bewirken. Die bekannte Rohrdichtung weist jedoch eine Schwachstelle auf, die in der Dichtungsanordnung und in der Lösung des Abdichtproblemes gegenüber der Innenwand der Rohrmuffe besteht.

Die Dichtfunktion bei dieser bekannten Rohrdichtung soll nämlich durch einen Haltering übernommen werden, der bereits beim Einsetzen der gesamten Rohrdichtung eine nach radial außen gegen die Innenwand der Rohrmuffe gerichtete Kraft ausübt. Nach Einschieben der gesamten Rohrdichtung, die eine relativ lange axiale Materialwand aufweist, die am inneren Ende in den gegen die Innenwand der Rohrmuffe ragenden Haltering übergeht, wird der zwischen der Materialwand und dem als Fortsatz daran ausgebildeten Haltering, sowie der Innenwand der Rohrmuffe gebildete Freiraum mit einer härtbaren Vergußmasse ausgefüllt. Der gegen die Muffeninnenwand ragende Haltering bildet daher primär eine Begrenzungswand für den Vergußraum. Dies wird auch daraus deutlich, daß nach dem Aushärten der Vergußmasse die durch das eingeschobene Spitzende auf das Dichtlippen-Paar übertragenen Kräfte über den schwenkungsflexiblen Verbindungsbereich im wesentlichen radial nach außen auf die harte Vergußmasse übertragen werden.

Auf den unteren inneren Haltering der Rohrdichtung gegenüber der Innenwand der Rohrmuffe werden jedoch kaum oder gar keine Kräfte, die vom Rohrspitzende ausgehen, übertragen. Das bedeutet, daß die Andruckkraft an dieser Stelle gegen die Innenwand der Rohrmuffe nicht erhöht wird, sondern vielmehr durch Rißbildungen in der Vergußmasse selbst verschlechtert wird. Trotz eines relativ großen Materialverbrauches für eine derartige gattungsmäßige Rohrdichtung wird daher die Abdichtfunktion nach innen und außen gegenüber der Innenwand der Rohrmuffe äußerst kritisch oder existiert überhaupt nicht mehr.

Eine andere Rohrdichtung ist aus der DE 23 25 231 B2 bekannt. Die letztgenante Rohrdichtung weist zwar ebenfalls zwei Dichtlippen auf, sie ist aber nicht gattungsgemäß, da eine Abdichtung gegenüber der äußeren Umfangswand des Rohrspitzendes nur im Zusammenwirken mit einer Dichtlippe erfolgt. Die zweite nach axial einwärts gerichtete Dichtlippe kommt beim Einschieben des Rohrspitzendes normalerweise in Anlage mit der an der Innenwand der Rohrmuffe angeordneten Halteeinrichtung der gesamten Rohrdichtung. Der Nachteil,der bei dieser Art von Rohrdichtung auftritt, besteht einerseits darin, daß die Abdichtung gegenüber der äußeren Umfangswand des Rohrspitzendes im Prinzip durch eine Flächendichtung erfolgt, die aus der speziellen Konfiguration der gesamten bekannten Rohrdichtung resultiert. Auch die Abdichtung gegenüber der Innenwand der Rohrmuffe wird in den denkbar möglichen Formen der längeren Halteeinrichtung oder der verkürzten Halteeinrichtung durch eine Flächendichtung bewirkt. Diese letztgenannte Flächendichtung kommt dadurch zustande, daß die anfangs nach axial innen zeigende Dichtlippe durch das Einschieben des Rohrspitzendes an ihrem Lippenbereich nahezu umgeschlagen wird und in dieser Art gegen die Halteeinrichtung bzw. die Innenwand der Rohrmuffe zu liegen kommt. Durch das weitere Einschieben des Rohrspitzendes wird die anfangs zur Muffenöffnung zeigende Dichtlippe so weit nach axial innen gezwungen, daß eine Materialverpressung zwischen der umgeschlagenen inneren Dichtlippe und der ersten Dichtlippe bzw. dem Verbindungsbereich,gegebenenfalls unter Einbeziehung der Materialverpressung in der verlängerten Halteeinrichtung, herbeigeführt wird.

Die Nachteile von Flächendichtungen gegenüber Lippendichtungen sind hinreichend bekannt, wobei nur der geringere
Druck pro Flächeneinheit erwähnt sei. Hinzu kommt bei der
aus der DE 23 25 231 B2 bekannten Rohrdichtung, daß im Prinzip an der äußeren Umfangswand des Rohrspitzendes nur eine
Abdichtung gegen Innendruck, nicht jedoch gegen Außendruck
besteht.

Der Erfindung liegt daher die Aufgabe zugrunde, eine Rohrdichtung so zu schaffen, daß bei günstigem Materialbedarf
sehr gute und zuverlässige Dichtungsverhältnisse sowohl gegenüber dem Rohrspitzende als auch der Innenwand der Rohrmuffe erreicht werden.

Diese Aufgabe wird bei einer gattungsgemäßen Rohrdichtung
durch die Merkmale des kennzeichnenden Teils des Anspruches 1
gelöst.

Die erfindungsgemäße Rohrdichtung unterscheidet sich von den
vorausgehend erwähnten bekannten Rohrdichtungen grundsätzlich
dadurch, daß drei Dichtlippen vorgesehen sind und so angeordnet sind, daß eine Zweifachabdichtung an der äußeren Umfangswand des Rohrspitzendes erfolgt und eine weitere Lippenabdichtung gegenüber der Innenwand der Rohrmuffe. Die Konfiguration
der drei Dichtlippen zueinander, aber auch deren Verbindung
über den Verbindungsbereich mit der Halteeinrichtung ist so
gewählt, daß bei der durch das eingeführte Rohrspitzende bewirkten Verschwenkung der ersten und zweiten Dichtlippe auch
die dritte Dichtlippe radial nach außen verschwenkt wird, so
daß diese in eine Dichtungsanlage gegen die Innenwand der Rohrmuffe gelangt. Neben dieser durch die dritte Dichtlippe bewirkte
Abdichtung an der Innenwand resultiert durch die Abstützung der
dritten Dichtlippe an der Innenwand der Rohrmuffe eine in radialer
Richtung nach innen gegen die Umfangswand des Rohrspitzendes
gerichtete Kraftkomponente. Diese Kraftkomponente wird durch die
Anordnung der dritten Dichtlippe etwa gegenüberliegend zum
zwischen dem Dichtlippen-Paar eingeschlossenen Winkel auf die

Dichtlippen 1 und 2 übertragen, wodurch diese eine Abstützung gegenüber der Innenwand der Rohrmuffe erhalten. Durch diese Abstützung werden die Kräfte zwischen Rohrspitzende und Rohrmuffe im wesentlichen über die drei Dichtlippen übertragen und nicht primär über die Halteeinrichtung, so daß durch höhere Kraftkomponenten an den drei Dichtlippen auch die Lippendichtungswirkung verbessert wird.

Die Rohrdichtung, deren hauptsächlicher Anwendungsbereich bei Rohren mit größeren Durchmessern liegt, die vor allen Dingen aus mineralischen Werkstoffen hergestellt werden, eignet sich besonders zur Überbrückung und zum Ausgleich der bei derartigen Rohren auftretenden großen Fertigungstoleranzen. Die Rohrdichtung weist hierzu in bekannter Weise ein Dichtlippenpaar auf, dessen erste Dichtlippe vorzugsweise sehr genau axial zur Muffenöffnung ausgerichtet ist. Die zweite Dichtlippe zeigt im Gegensatz dazu etwa radial zur Rohrachse hin und bildet zur Verbesserung des Angriffsbereiches des Rohrspitzendes und zur Erhöhung der Verformungsspannung in den Dichtlippen 1 und 2 vorzugsweise eine V-förmige Konfiguration mit der ersten Dichtlippe. Der schwenkungsflexible Verbindungsbereich, der am Basisbereich aller drei Dichtlippen angreift und diese mit der fest in oder an der Rohrmuffe vorgesehenen Halteeinrichtung verbindet, ist als Materialschwächungsbereich ausgebildet. Die Materialschwächung ist jedoch so gehalten, daß eine zuverlässige Anbindung aller drei Dichtlippen an die Halteeinrichtung jederzeit gewährleistet ist. Gleichzeitig jedoch läßt dieser Verbindungsbereich die gemeinsame Verschwenkung der Dreilippenkonfiguration ohne größeren Kraftaufwand auf das Rohrspitzende zu.

Die Materialauswahl des gummielastischen Werkstoffes für die Rohrdichtung ist in Kombination mit der Stärkenbemessung der einzelnen Dichtlippen so getroffen, daß es möglich ist, die drei Dichtlippen gemeinsam zu verschwenken und nach Anlage an den entsprechenden Wandungen in erster Linie über die in den Dichtlippen auftretenden Verformungsspannungen die Abdichtwirkung zu erreichen.

0090934

Während die Verschwenkung des Dichtlippenpaares in bekannter
Weise nach axial innen bzw. auch nach radial innen erfolgt,
wird, da der Verschwenkungsdrehpunkt etwa im Basisbereich
aller drei Dichtlippen liegt, die dritte Dichtlippe
beim Einschieben des Rohrspitzendes in die Rohrmuffe im wesentlichen nach radial außen bewegt. Die Länge und die Neigung der dritten Dichtlippe bzw. deren Mittellinie gegenüber
der Innenwand der Rohrmuffe ist so getroffen, daß im Fertigungstoleranzbereich liegende Unterschiede zwischen den Durchmessern
des Rohrspitzendes und der Rohrmuffe, aber auch Abmessungsabweichungen zwischen einzelnen Bereichen der Innenwand der Rohrmuffe, bei Aufrechterhaltung einer zuverlässigen Abdichtung
und Abstützung ausgeglichen werden können.

Die Materialersparnis resultiert vor allen Dingen daraus, daß
die hauptsächlichen Funktionselemente der Rohrdichtung, nämlich die drei Dichtlippen, das Hauptvolumen der Rohrdichtung
darstellen, während die Halteeinrichtung mit dem durch die
Schwächungszone gebildeten Verbindungsbereich nur einen vergleichsweise geringen Materialbedarf haben.

Eine drastische Reduzierung des Materialverbrauchs zur Herstellung der Rohrdichtung wird dadurch erreicht, daß in der Muffeninnenwand ein Muffenkragen ausgebildet wird, auf den eine Halteeinrichtung, die beispielsweise als Haltering mit einem etwa
quadratischen Querschnitt gestaltet sein kann, bei der Montage
der Rohrdichtung einfach aufgesetzt wird. Die Ausbildung dieses Muffenkragens, von dem aus die weitere Innenwand der Rohrmuffe direkt in die Muffenöffnung mündet, erübrigt materialaufwendige große Halteeinrichtungen . Andererseits wird dadurch
jedoch eine feste und zuverlässige Anbringung der Rohrdichtung
in der Rohrmuffe ermöglicht.

Sofern in axialer Richtung zur Muffenöffnung hin über der Halteeinrichtung und zwischen einem Innenwandungsbereich der
Rohrmuffe und der radial außen liegenden Seite der ersten Dichtlippe eine härtbare Vergußmasse vorgesehen wird, kann auch
bei einer weiteren Materialeinsparung an der Halteeinrichtung eine feste und dauerhafte Anbringung der Rohrdichtung
in der Muffe erfolgen.

Der Durchmesser des durch das Lippenende der dritten Dichtlippe gebildeten Dichtungsringes wird vorzugsweise etwas
kleiner gemacht als der im Fertigungstoleranzbereich liegende kleinste Innendurchmesser der abzudichtenden Innenwand der Rohrmuffe. Hierbei ist jedoch zu berücksichtigen,
daß abhängig von der Orientierung der dritten Dichtlippe bei
einem geringen Abstand zwischen dem Lippenende und der Innenwand der Rohrmuffe die dritte Dichtlippe beim Einschieben des
Spitzendes sehr bald gegen die Innenwand zu liegen kommt.
Die Schwächungszone zwischen der Halteeinrichtung und dem
Basisbereich der Dichtlippen muß so ausgelegt sein, um die
hierdurch übertragenen Kraftkomponenten aufnehmen zu können.
Vorzugsweise wird der Abstand zwischen dem Lippenende der
dritten Dichtlippe und der Innenwand der Rohrmuffe unter Einbeziehung der Länge und der Ausrichtung der dritten Dichtlippe so groß sein, daß die dritte Dichtlippe etwa bei Anlage
der ersten Dichtlippe an der äußeren Umfangswand des Rohrspitzendes gegen die Innenwand zu liegen kommt. Der Vorteil
eines derartigen Zusammenwirkens liegt darin, daß bis zur
Anlage der ersten Dichtlippe an der Umfangswand des Rohrspitzendes die Dreilippenkonfiguration im wesentlichen eine Schwenkbewegung ausführt. Bei Anlage der ersten Dichtlippe an der
Umfangswand bedingt dies jedoch die allmähliche Spreizung
der beiden, das Dichtlippen-Paar bildenden. Dichtlippen 1 und
2, wobei durch diese Verformung Kraftkomponenten zum Basisbereich und nachfolgend in die dritte Dichtlippe übertragen werden können. Bei einer frühzeitigen Abstützung der dritten
Dichtlippe gegenüber der Innenwand der Rohrmuffe erfolgt daher kein wesentliches Ausweichen des Dichtlippen-Paares nach
radial außen. Vielmehr kann dann bereits ein stärkerer Andruck
des Dichtlippen-Paares gegen das Spitzende erfolgen. Geeigneterweise wird der Zeitpunkt der Abstützung der dritten Dichtlippe an der Innenwand in Übereinstimmung mit der Verschwenkung des Dichtlippen-Paares so terminiert, daß erst in der Endphase des Einsetzens des Rohrspitzendes die hauptsächlichste
Abstützungsfunktion seitens der dritten Dichtlippe zur Wirkung kommt, um auf diese Weise die erforderliche Einschubkraft für das Spitzende möglichst gering zu halten.

Eine günstige Kraftübertragung im eingesetzten Zustand des
Rohrspitzendes bei insgesamt relativ geringem Materialverbrauch erreicht man bei einer Y-Konfiguration der drei Dichtlippen, wobei der untere Schenkel der Y-Konfiguration die
dritte Dichtlippe bildet. Die Y-Konfiguration kann dabei so
ausgebildet sein, daß die erste und dritte Dichtlippe etwa
auf einer Verbindungsgeraden angeordnet sind. Die Verbindungsgerade bildet dann mit der Innenwand der Rohrmuffe vorzugsweise einen spitzen Winkel.

Die Längenabmessung der einzelnen Dichtlippen kann unterschiedlich sein, je nachdem, welche Andruckkräfte nach eingesetztem
Rohrspitzende an den einzelnen Dichtlippen erreicht werden
sollen. Geeigneterweise weisen jedoch zumindest die beiden
Dichtlippen 1 und 2 etwa gleiche Länge auf. Die Dichtlippe 3
kann im Vergleich dazu etwa die halbe Länge der Dichtlippe 1 bzw. 2 aufweisen , wobei diese Länge vom schwenkungsflexiblen Verbindungsbereich aus gerechnet ist. Die vorausgehend erwähnte Länge der Dichtlippe 3 wird jedoch ebenso durch
den zwischen ihrer Mittellinie und der Innenwand der Rohrmuffe
gebildeten Winkel unter Berücksichtigung des Anlagezeitpunktes
der dritten Lippe gegen die Innenwand bestimmt, so daß die dritte
Dichtlippe auch kürzer oder länger sein kann.
Während die in etwa eine V-Form bildenden Dichtlippen 1 und 2
vorzugsweise eine ungefähre Trapezform im Axialschnitt aufweisen, kann die dritte Dichtlippe als gleichschenkliges längliches
Dreieck geformt sein, wobei die kurze Seite den Anbindungsbereich zum Basisbereich aller drei Lippen darstellt.

Abweichungen von den vorausgehend beschriebenen Ausführungsformen sind in dem Bereich und Umfang möglich, in dem das Grundprinzip der primären Verschwenkung zweier Dichtlippen gegen das

Rohrspitzende mit dadurch verbundener Bewegung einer dritten Dichtlippe gegen die Innenwand der Rohrmuffe zur Abdichtung und Unterstützung durchgeführt wird, nicht verlassen wird. In diesem Rahmen kann beispielsweise die dritte Dichtlippe unterschiedliche Schenkellängen aufweisen. So wird bei einem längeren,gegen die Innenwand der Rohrmuffe zeigenden Schenkel, der Dichtfunktion eine stärkere Bedeutung zugeordnet, während bei einer Verlängerung des inneren, mehr zur Rohrachse orientierten Schenkels mit einem kürzeren Außenschenkel, die Abstützfunktion der ersten und zweiten Dichtlippe Vorrang eingeräumt wird.

Auch die Halteeinrichtung kann abweichend von einem im Querschnitt etwa quadratförmigen Haltering möglicherweise als eine, die Muffenöffnung zumindest an verschiedenen Stellen umgreifende Halterung ausgebildet sein. Selbstverständlich kommt auch durch die Halteeinrichtung eine Dichtungsfunktion gegenüber der Innenwand zustande, wobei z.B. bei der Auflage eines Halteringes auf einem Muffenkragen primär Wert auf eine Außenabdichtung gelegt wird.

Schließlich kann die Halteeinrichtung vorteilhafterweise auch als ein Haltering ausgebildet sein, der durch einen spreizbaren Klemmring in eine in der Muffeninnenwand ausgebildete Halteringnut eingedrückt wird. Dazu weist der Haltering vorzugsweise ein nach radial innen offenes Profil auf, in das der spreizbare Klemmring, der insbesondere aus Kunststoff bestehen kann, eingreift.

Die Erfindung wird nachstehend anhand eines schematisch dargestellten Ausführungsbeispiels noch mehr erläutert.

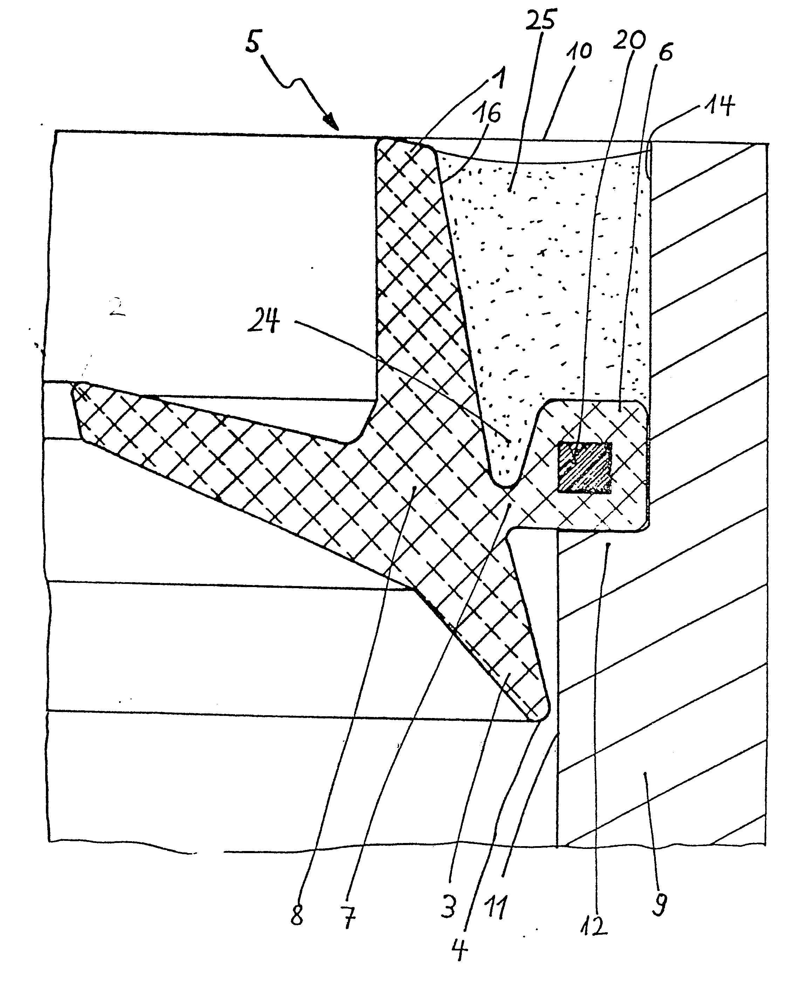

Die Figur zeigt einen Axialschnitt durch einen rechten Bereich eines Rohrmuffenendes, wobei das Rohrspitzende nicht dargestellt ist.

Die im Schnitt dargestellte Rohrmuffe 9 ist zu ihrer Rohrmündung 10 hin an der Innenwand 11 bzw. 14 mit einem Muffenkragen
12 versehen. Dieser Muffenkragen 12 ist als Stufe zwischen der
inneren Innenwand 11 und der äußeren Innenwand 14 ausgebildet.
Die innere Innenwand 11 hat einen kleineren Innendurchmesser als
die äußere, mit der Muffenöffnung 10 in Verbindung stehende
Innenwand 14. Beim Einführen der einstückig ausgebildeten Rohrdichtung, die vorzugsweise im Spritzgießverfahren oder durch
Formpressen hergestellt ist, kommt ein radial außen angeordneter
Haltering 6 mit seiner Unterseite gegen den Muffenkragen zu liegen.

Der Haltering 6 weist einen etwa quadratischen Querschnitt
auf und ist in seiner Ringmittellinie mit einem Versteifungsring 12,
der normalerweise ein Stahlring ist, verstärkt. Die Außenkontur des Halteringes 6 kann mit kleineren Dichtlippen oder
Zentrierfahnen versehen sein. Im gezeigten Ausführungsbeispiel ist die Außenkontur so gestaltet, daß der Haltering 6
mit seiner Unterseite und radialen Seite formschlüssig gegen
den Muffenkragen 12 bzw. einen Teil der Innenwand 14 anliegt.
Der Verstärkungsring 20 trägt dazu bei, die gesamte Rohrdichtung im Bereich des Muffenkragens 12 nach radial außen gegen
die Innenwand 14 zu spannen und so festzulegen.

Nach radial innen ist an dem Haltering 6 über einem schwenkungsflexiblen Verbindungsbereich 7 die im Prinzip eine Y-Form
aufweisende Dreilippenkonfiguration angeformt. Eine erste und
zweite Dichtlippe 1 und 2 bilden in dieser Dreilippenkonfiguration als Teil der gesamten Rohrdichtung 5 ein V-förmiges
Lippenpaar. Die erste Dichtungslippe 1 ist dabei mit ihrer
Innenseite etwa parallel zur Rohrachse angeordnet und ragt
vom Muffeninneren bis zum Rand der Muffenöffnung 10. Die Rückseite 16 dieser ersten Dichtungslippe 1, die gegenüberliegend
von der Innenwand 14 der Rohrmuffe 9 vorgesehen ist, bildet
mit der Innenseite der ersten Dichtlippe etwa ein längliches
Trapez. Zum Rohrmuffeninneren hin geht der untere Bereich
dieser ersten Dichtlippe 1 in einen Basisbereich 8 über.

An diesem Basisbereich 8 sind des weiteren die Dichtlippe 2, aber auch die Dichtlippe 3 und der Verbindungsbereich 7 angeformt. Die Dichtlippe 2 erstreckt sich dabei, durch die V-förmige Konfiguration einen etwas kleineren Winkel als 90° bildend im wesentlichen nach radial innen zur Rohrachse hin. Gleichzeitig ist die Dichtungslippe 2 jedoch auch aufgrund des mit der Dichtlippe 1 gebildeten Winkels leicht zur Muffenöffnung 10 orientiert. Im Prinzip entspricht die Kontur der zweiten Dichtlippe 2 der der Dichtlippe 1, wobei das etwas abgeschrägte Dichtlippenende kontinuierlich mit leicht zunehmender Stärke der Dichtlippe in den Basisbereich 8 übergeht.

Am radial äußeren Bereich des Basisbereiches 8 greift der Verbindungsbereich 7 an, der etwa eine Materialstärke von ungefähr 1/3 der Gesamthöhe des Halteringes 6 aufweist. Dieser Verbindungsbereich 7 schließt etwa an die Unterseite des Halteringes 6 an, so daß an dieser Stelle allein der untere, nach radial innen zeigende Bereich der Innenseite des Halteringes 6 materialverbunden ist. Durch diese Anbindung entsteht zwischen der Rückseite 16 der ersten Dichtlippe 1 und dem Haltering 6 eine Vertiefungsrinne 24, die im wesentlichen zum Muffenspiegel zeigt.

Axial einwärts vom Haltering 6 und dem schwenkungsflexiblen Verbindungsbereich 7 ist die dritte Dichtlippe 3 am Basisbereich 8 angeformt. Die dritte Dichtlippe 3 ist etwa gegenüberliegend von dem zwischen den Dichtlippen 1 und 2 gebildeten Winkel angeordnet. Die Orientierung ihrer Mittellinie bildet dabei etwa einen spitzen Winkel von 30° gegen die Innenwand 11 der Rohrmuffe 9. Insgesamt hat die Außenkontur der dritten Dichtlippe 3 etwa die Gestalt eines gleichschenkligen länglichen Dreiecks, das an seiner Spitze das Lippenende 4 bildet, während der materialstärkere obere Bereich in den Basisbereich 8 übergeht.

Die Anbindung der dritten Dichtlippe 3 am Basisbereich 8 und
ihre Ausrichtung mit der ersten Dichtlippe 1 ist im Ausführungsbeispiel so, daß die Rückseite 16 der ersten Dichtlippe 1 und
die der Innenwand 11 gegenüberliegenden Seite der dritten Dichtlippe 3 näherungsweise eine Gerade bilden. Die Dichtlippe 3
endet nach der Figur in einem sehr geringen Abstand von der
Innenwand 11 der Rohrmuffe. Gegenüber der Dichtlippe 2 jedoch
geht die, etwa zum Muffenspiegel zeigende Seite der dritten
Dichtlippe in eine Knickbildung über, wobei etwa ein Außenwinkel
zwischen den ineinander übergehenden Seiten der dritten und
der zweiten Dichtlippe 3 und 2 von ungefähr 150° entsteht.

Zur weiteren Erhöhung der Befestigung der Rohrdichtung in der
Rohrmuffe kann eine Hartvergußmasse 25 im wesentlichen oberhalb
des Halteringes 6 eingegossen worden sein. Diese Vergußmasse 25
füllt dann den zwischen der Rückseite 16 der ersten Dichtlippe 1, der Vertiefungsrinne 24, dem Haltering 6 und der
Innenwand 14 gebildeten Ringbereich aus. Durch dieses Vergußprinzip ist es zusätzlich möglich, den Haltering 6, aber auch
seinen Verstärkungsring 20 noch weiter materialsparend abzuschwächen, da die beiden letztgenannten Elemente primär in der
ersten Phase des Einlegens der Rohrdichtung in die Rohrmuffe
die Halterung übernehmen müssen. Im vergossenen Zustand kann
die Befestigung der Rohrdichtung dann sowohl in einer Richtung
nach axial außen als auch nach radial innen weitgehend von der
ausgehärteten Vergußmasse 25 übernommen werden.

Beim Einschieben des Rohrspitzendes, das hier nicht gezeigt ist,
gelangt dieses in Eingriff mit der zur Mündungsöffnung 10 orientierten Seite der Dichtlippe 2. Hierdurch wird die Dichtlippe 2
zunächst nach axial innen und durch die Anbindung über den Verbindungsbereich 7 auch allmählich leicht nach radial außen verschwenkt. Durch diese Verschwenkung gelangt die dritte Dichtlippe 3 mit ihrem Ende 4 im Ausführungsbeispiel relativ bald in Anlage mit der Innenwand 11 der Rohrmuffe 9. Hierdurch findet eine Abstützung statt. Abhängig vom Durchmesser der Außenwand des Rohrspitzendes ist die erste Dichtlippe 1 bereits in Anlage gegen diese Außenwand gekommen, oder gelangt erst noch gegen die Außenwand.

Beim Kontakt der beiden Dichtlippen 1 und 2 mit der Außenwand des Rohrspitzendes wird eine Verformung der beiden Dichtlippen 1 und 2 im Sinne einer Spreizung herbeigeführt. Diese Verformung wird je nach der gewählten Konfiguration der Dichtlippen, worunter hier Länge, Orientierung und Materialstärke beispielsweise verstanden werden soll, und den auftretenden Fertigungstoleranzen zwischen Rohrmuffe und Rohrspitzende, durch die Anlage der dritten Dichtlippe gegen die Innenwand 11 noch unterstützt.

Bei vollständig eingeschobenem Spitzende erfolgt dann die Kraftübertragung der primär aus einer Verformungsverpressung resultierenden Kräfte von den V-förmigen Dichtlippen 1 und 2 auf die dritte Dichtlippe bzw. in umgedrehter Richtung. Die Kraftübertragung auf den Verbindungsbereich 7 und den Haltering 6 wird zumindest im gezeigten Ausführungsbeispiel minimal gehalten. Die dadurch erreicht Kraftübertragung zwischen den drei Dichtlippen 1,2 und 3 gewährleistet einerseits eine sichere Abdichtung gegen Innen- und Außendruck am Rohrspitzende, aber auch eine zuverlässige Dichtfunktion gegenüber der Innenwand der Rohrmuffe 9, wobei diese Dichtfunktion primär durch die Dichtlippe 3 erzeugt wird.

Im Ausführungsbeispiel ist die Dichtlippe 3 so konstruiert, daß ihr äußerer Ringdurchmesser kleiner ist als der kleinste, im Fertigungstoleranzbereich liegende Innendurchmesser der Innenwand 11 der Rohrmuffe 9. Hierdurch soll sichergestellt werden, daß beim Einsetzen der gesamten Rohrdichtung ein
Anschlag der Dichtlippe 3 gegen den Muffenkragen 12 auf alle
Fälle verhindert wird. Die Länge der Dichtlippe 3 ist im
Beispiel etwa mit der Hälfte der Länge der Dichtlippen 1 oder
2 gewählt. Diese Länge der 3. Dichtlippe 3 kann jedoch in
Abhängigkeit von dem Zeitpunkt,ab    dem der Beginn der Abstützung für das Dichtlippenpaar erfolgen soll, unter Einbeziehung der Orientierung auch anders gewählt sein.

Rohrdichtung

1. Rohrdichtung aus gummielastischem Werkstoff für eine
   ringgedichtete Rohrsteckverbindung, insbesondere für
   eine Rohrmuffe und ein zugeordnetes Rohrspitzende,

   1.1  mit mindestens zwei Dichtlippen, die ein durch einen
        Basisbereich verbundenes Dichtlippen-Paar bilden,
        dessen erste Dichtlippe etwa axial zur Muffenöffnung
        zeigt und dessen zweite Dichtlippe etwa radial zur
        Rohrachse steht,

   1.2  mit einer an/in der Rohrmuffe vorgesehenen Halteeinrichtung der Dichtlippen, und

   1.3  mit einem schwenkungsflexiblen Verbindungsbereich
        zwischen der Halteeinrichtung und den Dichtlippen für ein gemeinsames Verschwenken des Dichtlippen-
Paares in Dichtungsanlage gegen die äußere Umfangswand des Rohrspitzendes bei dessen Einschieben,

dadurch  g e k e n n z e i c h n e t ,

1.4  daß eine dritte Dichtlippe (3) am Basisbereich (8)
des Dichtlippen-Paares (1,2) etwa gegenüberliegend
zu deren eingeschlossenem Winkel angeformt ist,
und

1.5  daß beim Verschwenken des Dichtlippen-Paares (1,2)
die dritte Dichtlippe (3) nach radial auswärts
in eine axial einwärts vom Verbindungsbereich (7)
vorgesehene, das Dichtlippen-Paar stützende, Dichtungsanlage mit der Innenwand (11) der Rohrmuffe (9) bringbar ist.

2. Rohrdichtung nach Anspruch 1,
dadurch  g e k e n n z e i c h n e t ,
daß die dritte Dichtlippe (3) so bemessen ist, daß sie beim
Einschieben des Rohrspitzendes nur geringfügig bis zur
Anlage an der Innenwand (11) der Rohrmuffe (9) radial
nach außen verschwenkbar ist.

3. Rohrdichtung nach Anspruch 1 oder 2,
dadurch  g e k e n n z e i c h n e t ,
daß die verlängerte Mittellinie der dritten Dichtlippe (3)
im Axialschnitt einen spitzen Winkel mit der Innenwand (11)
der Rohrmuffe (9) bildet.

4. Rohrdichtung nach einem der Ansprüche 1 bis 3,
dadurch  g e k e n n z e i c h n e t ,
daß das Lippenende (4) der dritten Dichtlippe (3) bei
offener Rohrmuffe (9) einen Ringdurchmesser aufweist, der

- 3 -

0090934

etwas kleiner ist, als der kleinste im Fertigungstoleranzbereich liegende Innendurchmesser der durch die dritte
Dichtlippe (3) zu dichtenden Innenwand (11) der Rohrmuffe (9).

5. Rohrdichtung nach einem der Ansprüche 1 bis 4,
   dadurch g e k e n n z e i c h n e t ,
   daß die drei Dichtlippen (1,2,3) im Axialschnitt etwa
   eine Y-Konfiguration aufweisen, deren unterer Schenkel
   die dritte Dichtlippe (3) bildet.

6. Rohrdichtung nach einem der Ansprüche 1 bis 5,
   dadurch g e k e n n z e i c h n e t ,
   daß die erste und dritte Dichtlippe (1,3) etwa auf einer
   Verbindungsgeraden angeordnet sind, die einen spitzen
   Winkel mit der Innenwand (11) der Rohrmuffe (9) bildet.

7. Rohrdichtung nach einem der Ansprüche 1 bis 6,
   dadurch g e k e n n z e i c h n e t ,
   daß die Längserstreckung vom Basisbereich (8) aus
   der ersten oder zweiten Dichtlippe (1,2) zur dritten
   Dichtlippe (3) ungefähr ein Verhältnis von 2:1 aufweist.

8. Rohrdichtung nach einem der Ansprüche 1 bis 7,
   dadurch g e k e n n z e i c h n e t ,
   daß die erste und die zweite Dichtlippe (1,2) im Axialschnitt eine V-Form bilden, deren Öffnungswinkel zur
   Muffenöffnung (10) zeigt.

9. Rohrdichtung nach einem der Ansprüche 1 bis 8,
   dadurch g e k e n n z e i c h n e t ,
   daß die dritte Dichtlippe (3) im Axialschnitt etwa die
   Form eines gleichschenkeligen länglichen Dreiecks
   aufweist.

10. Rohrdichtung nach einem der Ansprüche 1 bis 9,
    dadurch g e k e n n z e i c h n e t ,
    daß die Halteeinrichtung (6,20) als auf einem inneren
    Muffenkragen (12) angeordneter Haltering (6) gestaltet
    ist, und
    daß zwischen der die Muffenöffnung (10) begrenzenden Innenwand (14), dem Haltering (6), dem Verbindungsbereich (7)
    und der radial äußeren Längsseite (16) der ersten Dichtlippe (1) eine ausgehärtete Vergußmasse (25) vorgesehen
    ist.

11. Rohrdichtung nach einem der Ansprüche 1 bis 9,
    dadurch g e k e n n z e i c h n e t ,
    daß die Halteeinrichtung ein Haltering ist, der durch
    einen auf ihn einwirkenden spreizbaren Klemmring
    in eine Ringnut eingedrückt wird, die
    in der Innenwand der Muffe ausgebildet ist.

0090934